# EUROPEAN PATENT APPLICATION

(11) **EP 4 382 272 A1**
(43) Date of publication of application: **12.06.2024**
(21) Application number: 22852387.4
(22) Date of filing: 28.07.2022
(51) Int. Cl.: B29B 17/00, B29B 17/02

(54) **METHOD FOR RECIRCULATING NON-HYGROSCOPIC POLYMERS FROM RIGID PLASTIC FOOD CONTAINERS OR INDUSTRIAL POST-CONSUMPTION AND SYSTEM FOR CARRYING OUT SAID METHOD**

(30) Priority: 06.08.2021 ES 202130772
(71) Applicant: Guillem Picó, Ignacio, 03440 Ibi (Alicante) (ES)
(72) Inventor: Guillem Picó, Ignacio, 03440 Ibi (Alicante) (ES)
(74) Representative: Ibarra Garcia, Isabel
(86) International application number: PCT/ES2022/070507
(87) International publication number: WO 2023/012391

(57) **Abstract**

The present invention relates to a method for recirculating non-hygroscopic polymers from rigid plastic food containers or industrial post-consumption and a system for carrying out said method. The method of the invention allows for low-speed grinding of the containers to be recirculated, keeping the contaminants on the surface of the flakes generated by the cutting of the hooked blades on different levels of a shredder, while helping to eliminate contaminants by scrubbing, which is done in pools specifically designed for this purpose, provided with a worm screw and perforated fins that extend from the same. Advantageously, the high-speed shredding of the flakes is done as one of the final steps of the method.

## Description

Method for recirculating non-hygroscopic polymers from rigid plastic food containers or industrial post-consumption and system for carrying out said method

### OBJECT OF THE INVENTION

The present invention relates to a method for enabling the recirculation of non-hygroscopic polymers. The method of the invention allows rigid plastic containers, whether from food waste or from industrial post-consumption, to be recirculated to be introduced back into the material use chain and to manufacture new containers.

To carry out the method of the invention, among other equipment that is part of the system of the invention, a shredder is used for low-speed grinding of the rigid plastic containers, said shredder being complemented with a sieve having a maximum passage opening of 20 mm. The shredder avoids generating high temperatures by working at a shaft rotation speed of between 20 and 40 rpm and causes the contaminated rigid plastics to be broken up into flakes, keeping the contaminant on their surface, thereby preventing cross-contamination.

In a complementary manner, the pools used for the steps of washing by scrubbing, the elimination of inks by scrubbing, and rinsing by scrubbing have a configuration such that it causes a large number of impacts of the flakes which considerably favor performing the processes that are sought.

### BACKGROUND OF THE INVENTION

Methods for plastic waste recycling are known in the prior art. The problem that arises with contaminated materials of this type is that the treated waste is not suitable for subsequent use in food-related applications since there is no absolute guarantee of the absence of contaminants.

In this sense, there are known washing systems that start with high-speed shredders that work at speeds of between 400 and 1500 rpm to obtain flakes of a size between 6 and 15 mm.

They are then subjected to a first pre-wash where they are mixed with hot water and chemical reagents which clean the plastics. Next, in these known methods, the waste is introduced into a pool with a worm screw, where the plastic is washed of possible contaminants by friction.

The treated waste is then rinsed in densimetric pools in which, if there are several types of materials, these are separated and then pass through a drying process in centrifuges, and then the plastics are granulated and ready for use.

It should be noted that one of the great drawbacks of the detailed method is that the high-speed shredders cause contamination of the treated plastic due to the friction and high temperatures to which they are subjected and which are generated by the cutting blades of the grinder. Specifically, the flakes obtained in this method present contaminants which are embedded in the internal structure of the flake itself, making their subsequent recirculation for use in food-related applications unfeasible. That is, in high-speed shredding the contaminants present in the plastic, such as printed inks, adhesive or organic residues, can be easily transferred and remain in the internal structure of the flakes obtained.

Moreover, in the known washing methods in which air is injected into pools, a large number of impacts of the flakes which cause their rubbing is not achieved, so that processes such as decontamination do not achieve the desired efficiency while maintaining the required economic viability.

In relation to other known methods, patent document number ES2448956T3 is mentioned, where said patent discloses a method for conditioning and detoxification of a thermoplastic material in which the washing and recirculation of plastics, such as PET, is carried out. This example mentions the treatment of PET bottles, such that the labels are first removed and then ground with high-speed mills. This high-speed milling obtains flakes that are washed and then subjected to high vacuum decontamination processes to remove contaminants that the flakes have absorbed. Finally, the flakes are extruded to obtain clean PET flakes for food consumption. This method uses the vacuum to eliminate the impurities present in the thermoplastic, and therefore requires the intervention of equipment working at high working pressures, which means the execution of a method that is more costly in economic terms and complicated to maintain.

Finally, it should be noted that there are known low-speed shredders the use of which is limited to a first step of volumetric reduction without being used in a treatment method to obtain flakes that are directly treated for decontamination, i.e., for the elimination of inks and printed labels by rubbing. Additionally, there are also known washing processes that use abrasive media to clean the flakes, generating chemical residues that are highly contaminating and more costly.

Based on the above, the applicant of the present patent has detected the need to develop a method that offers an effective solution for the recirculation of non-hygroscopic polymers, and guaranteeing a contaminant-free resulting material for subsequent use in food.

### DESCRIPTION OF THE INVENTION

The object of the invention relates to a treatment method where granulation of the material from rigid plastic containers is avoided until said material is completely free of contaminants. In this way, as will be set forth below, high-speed shredding to obtain a flake size between 5 and 8 mm is performed in one of the last steps of the method when the complete absence of contaminants is guaranteed.

This is a method that allows obtaining plastics from non-hygroscopic polymers, namely fluorinated polyethylene (PE), polypropylene (PP), polystyrene (PS), polyvinyl chloride (PVC), and polyvinylidene fluoride (PVDF) polymers, for recirculation as material for use in food-related applications.

Advantageously, the method provides contaminant-free resulting flakes which allow for use in food-related applications, thus preventing cross-contamination.

In order to be able to recirculate the obtained material and to be able to form again the product that it previously formed, it is necessary for the resulting product to have the necessary certifications issued by the European Food Safety Authority or by similar authorities such as the U.S. Food & Drug Administration.

Thus, the method allows the recirculation of the treated material, regardless of the channel through which it is collected, either through the home post-consumption channel in the specific container for this purpose or through the industrial post-consumption channel, rigid containers from the destruction of expired food or rigid containers from the rejection in factories dedicated to the production thereof.

To that end, the proposed method comprises the following steps:
- feeding with non-hygroscopic rigid plastic containers;
- low-speed grinding using a four-shaft shredder, wherein the speed of the shafts is between 20 and 40 rpm, without generating a high temperature, obtaining a flake size between 6 and 20 mm;
- centrifuging the flakes, using a vane centrifuge to eliminate organic contaminants;
- washing the flakes by scrubbing with wash water at basic pH between 10 and 14 and a temperature between 50 and 130°C, using a pool with a worm screw causing the flakes to be conveyed, provided with a plurality of perforated fins extending from the central body of the worm screw itself, generating the agitation and collision of the flakes with one another and against the fins, and wherein the pool is constantly bubbling due to the injection of air;
- eliminating inks by scrubbing the flakes with wash water at basic pH between 10 and 14 and a surfactant at a temperature between 50 and 130°C, using a pool with a worm screw causing the flakes to be conveyed, provided with a plurality of perforated fins extending from the central body of the worm screw itself, generating the agitation and collision of the flakes with one another and against the fins, and wherein the pool is constantly bubbling due to the injection of air;
- rinsing the flakes by scrubbing with water, using a pool with a worm screw causing the flakes to be conveyed, provided with a plurality of perforated fins extending from the central body of the worm screw itself, generating the agitation and collision of the flakes with one another and against the fins, and wherein the pool is constantly bubbling due to the injection of air;
- centrifuging the flakes using a vane centrifuge to separate solids from liquids;
- drying the flakes using a rotating cylindrical sieve;
- quality control by means of machine vision and a rejection device detecting and causing the ejection from the method of those flakes having a color other than the established color;
- high-speed shredding of the flakes to a size between 5 and 8 mm;
- disinfection of the flakes, preferably with ozonized water and UV light lamps.

Of the detailed methods, it is necessary to highlight the low-speed grinding and the steps in which the pool provided with a worm screw and perforated fins is used, i.e., the steps of washing by scrubbing, elimination of ink by scrubbing, and rinsing by scrubbing, as they are considered innovative not only because of the means used for carrying them out, but also because of the order in which they are carried out with respect to the rest of the steps mentioned above.

In this regard, it should be noted that in order to guarantee the permanence of the contaminants present in the rigid plastic containers only on the surface of the flakes obtained during the method, it is necessary to apply low-speed grinding that prevents high temperatures from being generated. Specifically, a shredder is used in the low-speed grinding, the shafts of which move at a speed of between 20 and 40 rpm and allow obtaining flakes of material between 6 and 20 mm. Thus, the step of low-speed grinding causes the rigid plastic containers to be broken up in such a way that it obtains flakes in which the contaminants remain on their surface.

It should be noted that the flakes obtained from the step of low-speed grinding have contaminants and impurities only on their surface, and therefore it is feasible to remove these contaminants and impurities by rubbing.

The advantage of low-speed grinding is that it is a slower method than other known methods that seek a high processing speed.

Specifically, the flakes are subjected to turbulent flow and vigorous collision in the treatment pools involved in the steps of washing by scrubbing, elimination of ink by scrubbing and rinsing by scrubbing, where the aforementioned scrubbing is caused by the following factors:
- The presence of constant bubbling provided by injecting air, preferably from the bottom and walls of the pool causing a turbulent flow for the agitation of the flakes contained in the pool. Nozzles are located on the bottom and walls of the pool for injecting air.
- The presence of a plurality of perforated fins extending from the central body of the worm screw generates surfaces or obstacles where the flakes collide.
- The movement of the worm screw, which in its displacement generates less turbulence than that caused by the turbulence generated by the constant bubbling when air is injected. The moderate speed of the worm screw enables the continuous impact of the flakes on the fins extending from the central body of the worm screw.

Therefore, the vigorous agitation itself of the flakes allows residues from labels, papers, adhesives, or organic compounds to be detached from the flakes, thus allowing washing at a lower temperature.

It should be noted that in the step of eliminating inks by scrubbing, the surfactant used is preferably hexadecyltrimethylammonium bromide with a proportion by weight of between 0.05 and 6%.

Optionally, and for the purpose of ensuring complete washing of the flakes, it is possible to include after the step of washing by scrubbing and before the elimination of inks by scrubbing, a second washing of the flakes by scrubbing with water, using a pool with a worm screw causing the flakes to be conveyed. Similarly to that explained above, the worm screw of the pool is provided with a plurality of perforated fins extending from the central body of the worm screw itself, generating the agitation and collision of the flakes with one another and against the fins, and wherein the pool is constantly bubbling due to the injection of air.

Moreover, it should be noted that the rotating cylindrical sieve is also known as a trommel and includes a drive motor for providing continuous rotational movement to the cylindrical sieve for drying the flakes. Preferably, drying in the rotating cylindrical sieve is caused by the outlet of hot air through a perforated central conduit arranged inside the rotating cylindrical sieve.

Optionally, quality control by means of machine vision and a rejection device is provided with a vibrating table to help in detecting flakes of a color other than the established color.

With respect to the step of high-speed shredding and the step of flake disinfection, it should be noted that both steps must be performed in a room where the continuous removal of contaminants is maintained so as to maintain conditions of cleanliness, which is commonly known as a clean room for the purpose of guaranteeing the use in food-related applications of the flakes obtained.

It is also optionally provided that the method of the present invention contemplate the inclusion of a final step in which the flakes obtained in disinfection are dried and melted to obtain pellets, which are cooled in an ozonized water bath and palletized. Similarly to what has been indicated above, the steps of drying, melting, cooling, and palletizing the material obtained in the method must be performed in a room where the continuous removal of contaminants is maintained so as to maintain conditions of cleanliness.

Moreover, in relation to the system required for carrying out the method of the invention, it should be indicated that said system comprises at least the following equipment:
- a shredder for low-speed grinding which is complemented with a sieve with a maximum opening of 20 mm, wherein the shredder is made up of at least four shafts: two outer shafts and two central shafts, with each shaft being provided with a plurality of hooked blades with levels;
- a vane centrifuge;
- a pool arranged in the step of washing by scrubbing which is provided with a worm screw and a plurality of perforated fins extending from the central body of the worm screw itself, and where the pool has a plurality of nozzles for injecting air and generation of a circular current; it should be noted that the pool, the worm screw and the fins are made of food-grade stainless steel,
- a pool arranged in the step of eliminating inks by scrubbing which is provided with a worm screw and a plurality of perforated fins extending from the central body of the worm screw itself, and where the pool has a plurality of nozzles for injecting air and the pool, the worm screw and the fins being made of food-grade stainless steel;
- a pool arranged in the step of rinsing by scrubbing which is provided with a worm screw and a plurality of perforated fins extending from the central body of the worm screw itself, and where the pool has a plurality of nozzles for injecting air and the pool, the worm screw and the fins being made of food-grade stainless steel;
- a vane centrifuge;
- a rotating cylindrical sieve for drying;
- a machine vision device linked to a rejection device;
- a high-speed shredder provided with blades;
- an ozonized water bath and UV light lamps for disinfection.

The configuration of the system described allows carrying out a treatment in which the central shafts of the shredder rotate in opposite and opposing directions, while each outer shaft of the shredder rotates in the same direction as its adjacent central shaft. This very novel arrangement in the application of decontamination and conditioning of rigid plastic containers allows obtaining flakes at the outlet of the step of low-speed grinding having contaminants arranged only on their surface, i.e., without being transferred to the interior of the flakes, enabling subsequent elimination thereof and thereby avoiding cross-contamination, which would avoid the subsequent use thereof in food-related applications as a non-hygroscopic polymer.

Lastly, it should be noted that the method and the system used for carrying out said method for recirculating non-hygroscopic polymers is characterized in that the flakes obtained will only be ground to sizes of between 5 and 8 mm only at the end of the method by means of high-speed shredding.

### BRIEF DESCRIPTION OF THE DRAWINGS

To complement the description made below and for the purpose of helping to better understand the features of the invention according to a preferred practical embodiment thereof, a set of drawings is attached as an integral part of said description in which the following has been depicted in an illustrative and non-limiting manner:
Figure 1 shows a perspective view of a shredder for carrying out the low-speed grinding according to a preferred embodiment of the invention.
Figure 2 shows a front view of the shredder linked to the sieve depicted in the preceding figure.
Figure 3 shows a front perspective view of the shredder linked to the sieve depicted in Figure 1.
Figure 4 shows a perspective view of a pool for carrying out the steps of washing by scrubbing, elimination of inks by scrubbing, and rinsing by scrubbing according to a preferred embodiment of the invention.
Figure 5 shows a section view of the pool depicted in the preceding figure.
Figure 6 shows a perspective view of the worm screw of the pool depicted in Figure 4.
Figure 7 shows a side view of the worm screw of the pool depicted in Figure 6.

### PREFERRED EMBODIMENT OF THE INVENTION

A preferred embodiment of the more novel equipment involved in the method of the present invention is detailed below for the purpose of providing a detailed explanation of the system involved in performing the method of the invention.

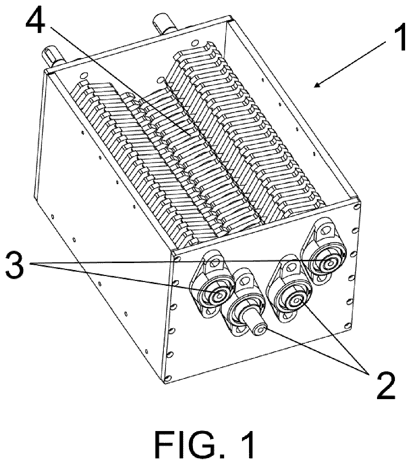

Figures 1, 2, and 3 illustrate a shredder (1) for carrying out low-speed grinding according to a preferred embodiment of the present invention, wherein the shredder (1) is preferably made up of four shafts.

The mentioned figures show the arrangement of the four shafts in the shredder (1), distinguishing the two central shafts (2) and the two outer shafts (3) and their rotational movement. In this regard, the central shafts (2) of the shredder (1) rotate in opposite and opposing directions, while each outer shaft (3) rotates in the same direction as its adjacent central shaft (2).

The two central shafts (2) thereby rotate in opposite and opposing directions, shredding the non-hygroscopic rigid plastic material in the central area located between the two central shafts (2), while the two outer shafts (3) of the shredder (1) perform the function of bringing the material closer to the central shafts (2) so as to be shredded, in addition to recirculating the flakes which, due to their excessive size, do not go through the sieve (5).

Each shaft is provided with a plurality of hooked blades with levels (4). The action of said hooked blades with levels (4) causes nipping of the non-hygroscopic rigid plastic material generated by shearing. In that sense, the material that is located between the hooked blades with levels (4) of the central shafts (2) is trapped in the levels or teeth of the blades (4), with the rotation of the central shafts (2) being in the opposite direction and at a speed of between 20 and 40 rpm, which causes the cutting of the flakes to the expected size.

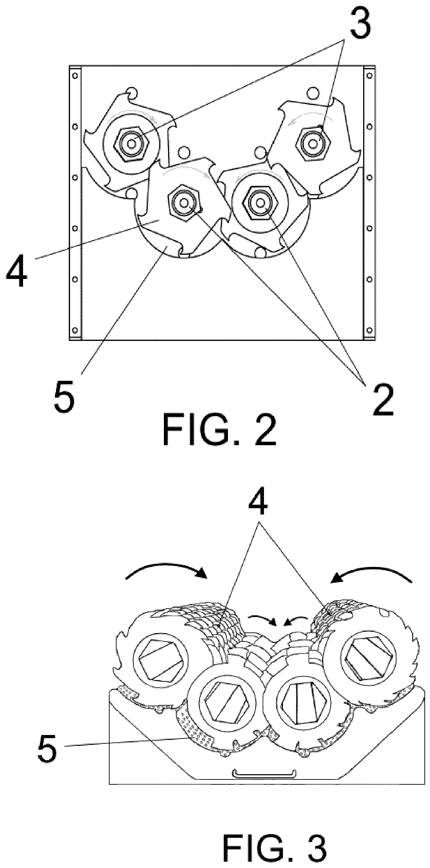

As observed in Figure 3, the sieve (5) is included in the shredder (1) to receive the flakes falling by gravity upon passing through the two central shafts (2), since the hooked blades with levels (4) are not enough to achieve the size required in the method. Therefore, the flakes larger than the size of the openings in the sieve (5) do not pass through same and are recirculated by the outer shafts (3) to be taken back to the central shafts (2) and subjected to cutting by shearing again until achieving the size expected to pass through the perforations of the sieve (5).

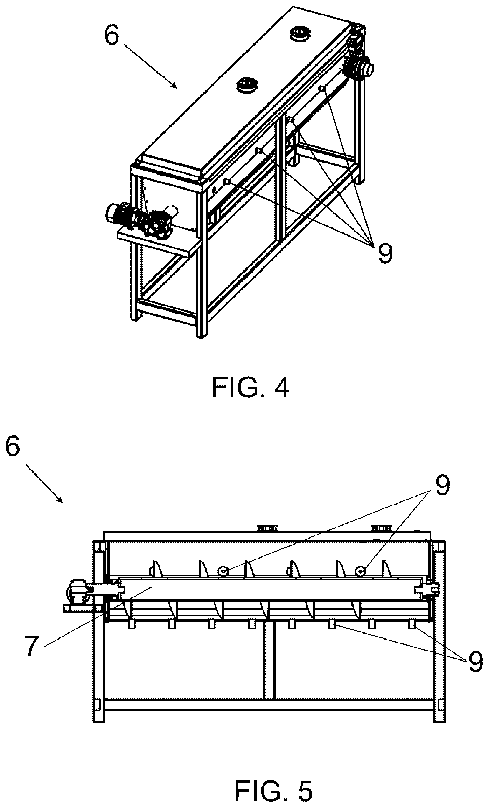

Moreover, Figures 4 and 5 depict a pool (6) for carrying out the steps of washing by scrubbing, elimination of inks by scrubbing, and rinsing by scrubbing. The pool (6) includes a worm screw (7) and a plurality of perforated fins (8) extending from the central body of the worm screw (7) itself.

In a complementary manner, the pool (6) has a plurality of nozzles (9) for injecting air, preferably by means of lower and lateral aeration since the nozzles (9) are arranged at the bottom of the pool (6) and on its side walls. Therefore, the injection of air into the pool (6) generates a circular current and turbulences that favor the collision of the flakes. Therefore, the injection of air into the pool (6) for the steps of washing by scrubbing, elimination of inks by scrubbing, and rinsing by scrubbing is performed by means of lower and lateral aeration.

Preferably, the pool (6), the worm screw (7), and the perforated fins (8) are made of food-grade stainless steel.

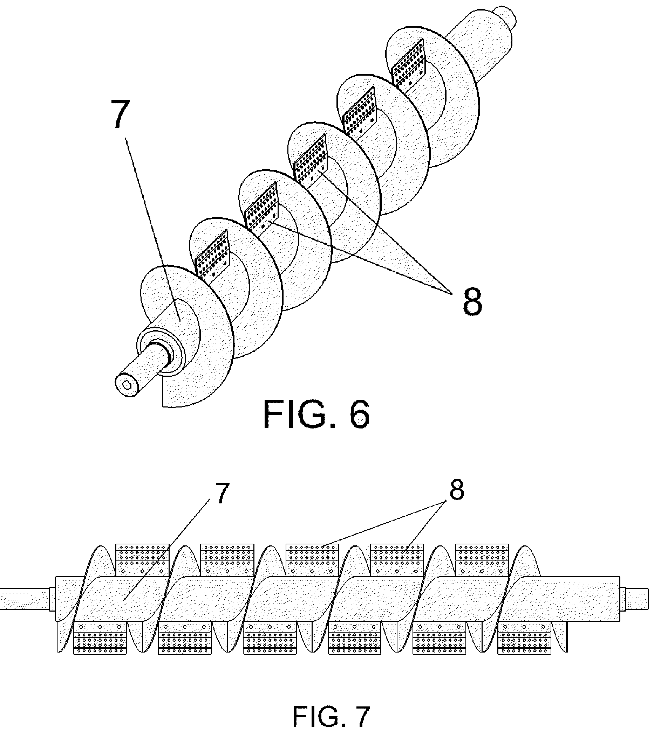

In that sense, Figures 5 and 6 depict the worm screw (7), which more clearly show the arrangement of the perforated fins (8).

Optionally, it should be noted that during the washing by scrubbing, the elimination of inks by scrubbing, and rinsing by scrubbing, a removal of gases takes place since the pools (6) are preferably tightly sealed, as observed in Figure 4, generating the condensation of the removed gases to be introduced into the pool (6) to avoid evaporation losses.

Preferably, the wash water used in the step of washing by scrubbing and in the step of eliminating inks by scrubbing is recirculated, passing through a filter to eliminate contaminants.

## Claims

1. A method for recirculating non-hygroscopic polymers from rigid plastic food containers or industrial post-consumption, **characterized in that** the method comprises the following steps:
- feeding with non-hygroscopic rigid plastic containers;
- low-speed grinding using a four-shaft shredder (1), wherein the speed of the shafts is between 20 and 40 rpm, without generating a high temperature, obtaining a flake size between 6 and 20 mm;
- centrifuging the flakes, using a vane centrifuge to eliminate organic contaminants;
- washing the flakes by scrubbing with wash water at basic pH between 10 and 14 and a temperature between 50 and 130°C, using a pool (6) with a worm screw (7) causing the flakes to be conveyed, provided with a plurality of perforated fins (8) extending from the central body of the worm screw (7) itself, generating the agitation and collision of the flakes with one another and against the fins (8), and wherein the pool (6) is constantly bubbling due to the injection of air;
- eliminating inks by scrubbing the flakes with wash water at basic pH between 10 and 14 and a surfactant at a temperature between 50 and 130°C, using a pool (6) with a worm screw (7) causing the flakes to be conveyed, provided with a plurality of perforated fins (8) extending from the central body of the worm screw (7) itself, generating the agitation and collision of the flakes with one another and against the fins (8), and wherein the pool (6) is constantly bubbling due to the injection of air;
- rinsing the flakes by scrubbing with water, using a pool (6) with a worm screw (7) causing the flakes to be conveyed, provided with a plurality of perforated fins (8) extending from the central body of the worm screw (7) itself, generating the agitation and collision of the flakes with one another and against the fins (8), and wherein the pool (6) is constantly bubbling due to the injection of air;
- centrifuging the flakes using a vane centrifuge to separate solids from liquids;
- drying the flakes using a rotating cylindrical sieve (5);
- quality control by means of machine vision and a rejection device detecting and causing the ejection from the method of those flakes having a color other than the established color;
- high-speed shredding of the flakes to a size between 5 and 8 mm;
- disinfection of the flakes;
such that the step of low-speed grinding causes the rigid plastic containers to be broken up such that flakes are obtained, in which flakes the contaminants remain on the surface thereof, while the step of high-speed shredding and the step of flake disinfection is performed in a room where the continuous removal of contaminants is maintained so as to maintain conditions of cleanliness.

2. The method for recirculating non-hygroscopic polymers from rigid plastic food containers or industrial post-consumption according to claim 1, **characterized in that** before the elimination of inks by scrubbing, a second wash is performed by scrubbing the flakes with water, using a pool (6) with a worm screw (7) causing the flakes to be conveyed, provided with a plurality of perforated fins (8) extending from the central body of the worm screw (7) itself, generating the agitation and collision of the flakes with one another and against the fins (8), and wherein the pool (6) is constantly bubbling due to the injection of air.

3. The method for recirculating non-hygroscopic polymers from rigid plastic food containers or industrial post-consumption according to claim 1, **characterized in that** during the washing by scrubbing, the elimination of inks by scrubbing, and rinsing by scrubbing, a removal of gases takes place since the pools (6) are tightly sealed, generating condensation of the removed gases to be reintroduced into the pool (6).

4. The method for recirculating non-hygroscopic polymers from rigid plastic food containers or industrial post-consumption according to claim 1, **characterized in that** the injection of air into the pool (6) for the steps of washing by scrubbing, elimination of inks by scrubbing, and rinsing by scrubbing is performed by means of lower and lateral aeration.

5. The method for recirculating non-hygroscopic polymers from rigid plastic food containers or industrial post-consumption according to claim 1, **characterized in that** the wash water used in the step of washing by scrubbing and in the step of eliminating inks by scrubbing is recirculated, passing through a filter to eliminate contaminants.

6. The method for recirculating non-hygroscopic polymers from rigid plastic food containers or industrial post-consumption according to claim 1, **characterized in that** the surfactant used in the step of eliminating inks by scrubbing is hexadecyltrimethylammonium bromide with a proportion by weight of between 0.05 and 6%.

7. The method for recirculating non-hygroscopic polymers from rigid plastic food containers or industrial post-consumption according to claim 1, **characterized in that** drying in the rotating cylindrical sieve is caused by the outlet of hot air through a perforated central conduit arranged inside the rotating cylindrical sieve.

8. The method for recirculating non-hygroscopic polymers from rigid plastic food containers or industrial post-consumption according to claim 1, **characterized in that** quality control by means of machine vision and a rejection device is provided with a vibrating table to help in detecting flakes of a color other than the established color.

9. The method for recirculating non-hygroscopic polymers from rigid plastic food containers or industrial post-consumption according to claim 1, **characterized in that** disinfection is performed with ozonized water and UV light lamps.

10. The method for recirculating non-hygroscopic polymers from rigid plastic food containers or industrial post-consumption according to claim 1, **characterized in that** the flakes obtained in disinfection are dried and melted to obtain pellets, which are cooled in an ozonized water bath and palletized, with the steps of drying, melting, cooling, and palletizing being performed in a room where the continuous removal of contaminants is maintained so as to maintain conditions of cleanliness.

11. A system for recirculating non-hygroscopic polymers from rigid plastic food containers or industrial post-consumption according to the method according to claims 1 to 10, **characterized in that** it comprises:
- a shredder (1) for low-speed grinding which is complemented with a sieve (5) with a maximum opening of 20 mm, wherein the shredder (1) is made up of at least four shafts: two outer shafts (3) and two central shafts (2), with each shaft being provided with a plurality of hooked blades with levels (4);
- a vane centrifuge;
- a pool (6) arranged in the step of washing by scrubbing which is provided with a worm screw (7) and a plurality of perforated fins (8) extending from the central body of the worm screw (7) itself, and wherein the pool (6) has a plurality of nozzles (9) for injecting air and the pool (6), the worm screw (7), and the fins (8) being made of food-grade stainless steel;
- a pool (6) arranged in the step of eliminating inks by scrubbing which is provided with a worm screw (7) and a plurality of perforated fins (8) extending from the central body of the worm screw (7) itself, and wherein the pool (6) has a plurality of nozzles (9) for injecting air and the pool (6), the worm screw (7) and the fins (8) being made of food-grade stainless steel;
- a pool (6) arranged in the step of rinsing by scrubbing which is provided with a worm screw (7) and a plurality of perforated fins (8) extending from the central body of the worm screw (7) itself, and wherein the pool (6) has a plurality of nozzles (9) for injecting air and the pool (6), the worm screw (7) and the fins (8) being made of food-grade stainless steel;
- a vane centrifuge;
- a rotating cylindrical sieve for drying;
- a machine vision device linked to a rejection device;
- a high-speed shredder provided with blades;
- an ozonized water bath and UV light lamps for disinfection;
such that the central shafts of the shredder (1) rotate in opposite and opposing directions, while each outer shaft (3) rotates in the same direction as its adjacent central shaft (2), thereby allowing the flakes obtained to have contaminants only on their surface.

12. The system for recirculating non-hygroscopic polymers from rigid plastic food containers or industrial post-consumption according to claim 11, **characterized in that** the plurality of nozzles (9) of the pools (6) for the steps of washing by scrubbing, elimination of inks by scrubbing, and rinsing by scrubbing are arranged at the bottom and on the side walls of the pools (6).
